# EUROPÄISCHE PATENTSCHRIFT

(11) **EP 1 130 361 B1**
(45) Veröffentlichungstag und Bekanntmachung des Hinweises auf die Patenterteilung: **23.07.2003**
(21) Anmeldenummer: 01102503.8
(22) Anmeldetag: 05.02.2001
(51) Int. Cl.: G01D 3/036, G01B 7/02

(54) **Temperaturkompensation bei kapazitiver Abstandsmessung mit Hilfe eines LC-Oszillators**
Temperature compensation for a capacitive distance measurement with an LC-oscillator
Compensation en température pour une mesure capacitive de distance avec un oscillateur LC

(30) Priorität: 15.02.2000 DE 10006691
(43) Veröffentlichungstag der Anmeldung: 05.09.2001
(73) Patentinhaber: Precitec KG, 76571 Gaggenau-Bad Rotenfels (DE)
(72) Erfinder: Spörl, Georg, 76287 Rheinstetten (DE); Biermann, Stephan, Dr., 76593 Gernsbach (DE)
(74) Vertreter: TER MEER STEINMEISTER & PARTNER GbR

(56) Entgegenhaltungen:
- EP-A- 0 303 563
- DE-A- 19 642 699
- US-A- 5 293 137

## Beschreibung

Die Erfindung betrifft ein Verfahren gemäß dem Oberbegriff des Patentanspruchs 1 sowie einen Bearbeitungskopf gemäß dem Oberbegriff des Patentanspruchs 8.

Aus der EP 0 303 563 A2 ist bereits ein Verfahren zur Temperaturkompensation eines einen Bearbeitungskopf aufweisenden LC-Oszillators zur kapazitiven Messung eines zwischen dem Bearbeitungskopf und einem Werkstück liegenden Abstands bekannt, bei dem ein Ausgangssignal des LC-Oszillators zu einem vom Bearbeitungskopf getrennt angeordneten Auswertegerät übertragen wird, mit Hilfe eines Temperatursensors die Temperatur des LC-Oszillators gemessen wird, die Temperatur zum Auswertegerät übertragen wird und im Auswertegerät eine Temperaturkompensation des Ausgangssignals des LC-Oszillators anhand der gemessenen Temperatur und eines dem Bearbeitungskopf zugeordneten Temperaturkoeffizienten erfolgt.

Auch ist dort ein Bearbeitungskopf mit einem zum Teil durch ihn gebildeten LC-Oszillator zur kapazitiven Messung eines Abstands zwischen dem Bearbeitungskopf und einem zu bearbeitenden Werkstück beschrieben, bei dem ein Ausgangssignal des LC-Oszillators zu einem vom Bearbeitungskopf getrennten Auswertegerät übertragbar ist, wobei der Bearbeitungskopf wenigstens einen Temperatursensor zur Messung der Temperatur des LC-Oszillators aufweist und die gemessene Temperatur zum Auswertegerät übertragbar ist.

Durch Überwachung des Ausgangs signals ist es möglich, den Bearbeitungskopf relativ zum Werkstück zu positionieren, um das Werkstück in geeigneter Weise bearbeiten zu können. Die Positionierung erfolgt dabei über eine Regeleinrichtung, die den gemessenen Abstand als Ist-Wert empfängt und die Lage des Bearbeitungskopfs in Abhängigkeit eines Vergleichs des Ist-Wertes mit einem vorgegebenen Soll-Wert steuert.

Der Bearbeitungskopf kann beispielsweise eine Laserschneiddrüse sein, aus der ein Laserstrahl zur Bearbeitung des Werkstücks austritt. Mit Hilfe des Laserstrahls können am Werkstück Schweißarbeiten, Schneidarbeiten, usw., durchgeführt werden.

Der Erfindung liegt die Aufgabe zugrunde, ein Verfahren und einen Bearbeitungskopf der eingangs genannten Art so weiterzubilden, daß auch bei Austausch des Bearbeitungskopfs immer eine einwandfreie Temperaturkompensation des Ausgangssignals gewährleistet ist.

Die verfahrensseitige Lösung der gestellten Aufgabe findet sich im kennzeichnenden Teil des Patentanspruchs 1. Dagegen findet sich die vorrichtungsseitige Lösung der gestellten Aufgabe im kennzeichnenden Teil des Patentanspruchs 8. Vorteilhafte Ausgestaltungen der Erfindung sind den jeweils nachgeordneten Unteransprüchen zu entnehmen.

Das Verfahren nach der Erfindung zeichnet sich dadurch aus, daß der Temperaturkoeffizient (K) in einem vom Bearbeitungskopf getragenen Speicher gespeichert und zum Zwecke der Temperaturkompensation des Ausgangssignals des LC-Oszillators zum Auswertegerät übertragen wird.

Der zur Temperaturkompensation erforderliche Temperaturkoeffizient. der einem jeweiligen Bearbeitungskopf zugeordnet ist, kann nach Herstellung des Bearbeitungskopfes empirisch aufgenommen werden. Er wird in einem Speicher abgelegt, der mit dem Bearbeitungskopf selbst verbunden ist. Die Zuordnung zwischen Bearbeitungskopf und Temperaturkoeffizienten ist somit immer eindeutig und kann zu einer zuverlässigeren Temperaturkompensation führen. Wird der Temperaturkoeffizient zu Kompensationszwecken benötigt, so wird er auf geeignetem Wege zum Auswertegerät übertragen, und zwar zusammen mit der vom Temperatursensor gemessenen Temperatur bzw. dem entsprechenden Temperaturmeßwert. Die Speicherung des Temperaturkoeffizienten kann z.B. in einem nichtflüchtigen Speicher erfolgen. Die Übertragung des Temperaturmeßwertes zum Auswertegerät und die Übertragung des Temperaturkoeffizienten zum Auswertegerät kann periodisch bzw. im vorbestimmten Zeitabständen durchgeführt werden.

Nach einer sehr vorteilhaften Ausgestaltung der Erfindung erfolgt die Übertragung der gemessenen Temperatur (des Temperaturmeßwertes) bzw. des gespeicherten Temperaturkoeffizienten zum Auswertegerät auf digitalem Wege, da hierdurch die Übertragung sehr genau durchgeführt werden kann. Zu diesem Zweck kann das Datenformat der digitalen Übertragung ein serieller Bitstrom sein, der in kodierter Form den Temperaturmeßwert bzw. den Temperaturkoeffizienten enthält. Hierauf lassen sich dann die üblichen Prüfverfahren zur Feststellung einer einwandfreien Datenübertragung vom Bearbeitungskopf zum Auswertegerät anwenden, falls erforderlich. Zur digitalen Übertragung von Temperaturmeßwert und dem Temperaturkoeffizienten kann aber auch eine Rechteckspannung verwendet werden, deren Frequenz der gemessenen Temperatur und deren Pulsdauer dem Temperaturkoeffizienten proportional sind. In einem solchen Falle läßt sich die Übertragungseinrichtung relativ einfach aufbauen, etwa unter Verwendung eines Mono-Flops.

Nach einer weiteren und sehr vorteilhaften Ausgestaltung der Erfindung werden wenigstens das Ausgangssignal des LC-Oszillators und die gemessene Temperatur, ggf. aber auch der Temperaturkoeffizient über dieselbe Leitung vom Bearbeitungskopf zum Auswertegerät übertragen, was eine besonders einfache Verbindung zwischen Bearbeitungskopf und Auswertgerät ergibt. Für diese Verbindung wird geeigneterweise ein Koaxialkabel verwendet. Dabei kann die Übertragung der gemessenen Temperatur bzw. des Temperaturkoeffizienten auf digitalem Wege in einem anderen Frequenzbereich als die des Ausgangssignals des LC-Oszillators erfolgen, um eine Störung zwischen den beiden Signalgruppen zu vermeiden.

In Weiterbildung der Erfindung kann die Digitalisierung durch eine Modulation des Strombedarfs einer bearbeitungskopfseitig vorhandenen Schaltung erfolgen, die den Temperatursensor enthält, wobei der modulierte Strombedarf im Auswertegerät überwacht wird. Aus dem modulierten Strombedarfkann das Auswertegerät somit auf die gemessene Temperatur bzw. auf den Temperaturkoeffizienten rückschließen, um diese Werte dann der weiteren Bearbeitung zugrunde zu legen.

Ein Bearbeitungskopf mit einem zum Teil durch ihn gebildeten LC-Oszillator zur kapazitiven Messung eines Abstands zwischen dem Bearbeitungskopf und einem zu bearbeitenden Werkstück, bei dem ein Ausgangssignal des LC-Oszillators zu einem vom Bearbeitungskopf getrennten Auswertegerät übertragbar ist, weist wenigstens einen Temperatursensor zur Messung der Temperatur des LC-Oszillators auf wobei die gemessene Temperatur zum Auswertegerät übertragbar ist. Dabei weist er auch einen Speicher zur Speicherung eines für ihn vorgesehenden Temperaturkoeffizienten auf, der ebenfalls zum Auswertegerät übertragbar ist.

Zur Digitalisierung und damit sicheren Übertragung der gemessenen Temperatur bzw. des Temperaturkoeffizienten dient eine am Bearbeitungskopf vorhandene Digitalisierungsschaltung, die über ein mit ihr verbindbares Kabel mit einer Versorgungsspannung vom Auswertgerät versorgbar ist, wobei die Digitalisierung der Einfachheit halber durch Modulation des Strombedarfs der Digitalisierungsschaltung dadurch erfolgt, daß ein die Vesorgungsspannung emfpangen der widerstand, der zur Digitalisierungsschaltung gehört, auf Masse geschaltet wird. Das Auswertegerät ist dann so ausgebildet, daß es eine Strommeßeinrichtung zum Messen des Versorgungsstroms des Bearbeitungskopfes aufweist und eine der Strommeßeinrichtung nachgeschaltete Vergleichsschaltung. Durch einen Vergleich der gemessenen Stromwerte des Versorgungsstromes mit einem durch die Vergleichsschaltung zur Verfügung gestellten Referenzstromwert lassen sich somit die Binärdaten für den übertragenden Temperaturmeßwert bzw. den übertragenden Temperaturkoeffizienten im Auswertegerät reproduzieren, und daraus dann die entsprechenden tatsächlichen Werte, um dann das gemessene Abstandssignal (Frequenzsignal) in Übereinstimmung mit dem Temperaturmeßwert und dem Temperaturkoeffizienten zu korrigieren. Dies kann in einem Mikroprozessor des Auswertegerätes erfolgen, der einerseits mit dem Ausgang der Vergleichsschaltung verbunden ist und andererseits über einen Hochpaß das Ausgangssignals des LC-Oszillators empfängt.

Es sei noch darauf hingewiesen, daß sämtliche Daten vorzugsweise über den Innenleiter eines Koaxialkabels vom Bearbeitungskopfzum Auswertegerät übertragen werden und daß der Bearbeitungskopf in beliebiger Weise ausgebildet sein kann. Es kann sich bei ihm etwa um einen Laserbearbeitungskopf handeln, der also von einem Laserstrahl durchsetzt wird, welcher zur Durchführung von Schweiß- oder Schneidarbeiten verwendet wird, aber auch um einen Bearbeitungskopf, bei dem etwa nur ein Bearbeitungsgas austritt.

Ausführungsbeispiele der Erfindung werden nachfolgend unter Bezugnahme auf die Zeichnung im einzelnen erläutert. Es zeigen:
**Fig. 1** eine aus Laserbearbeitungskopf und Auswertegerät bestehende Bearbeitungseinrichtung;
**Fig. 2** ein Datenformat bei der digitalen Übertragung eines seriellen Bitstromes vom Bearbeitungskopf zum Auswertegerät;
**Fig. 3** eine weitere am Bearbeitungskopfvorhandene Schaltung zur Modulation ihres Versorgungsstromes;
**Fig. 4** durch die Schaltung nach Fig. 3 erzeugte Rechtecksignale zur Übertragung einer gemessenen Temperatur und eines Temperaturkoeffizienten vom Bearbeitungskopf zum Auswertegerät; und
**Fig. 5** einen beispielsweisen Aufbau eines LC-Oszillators.

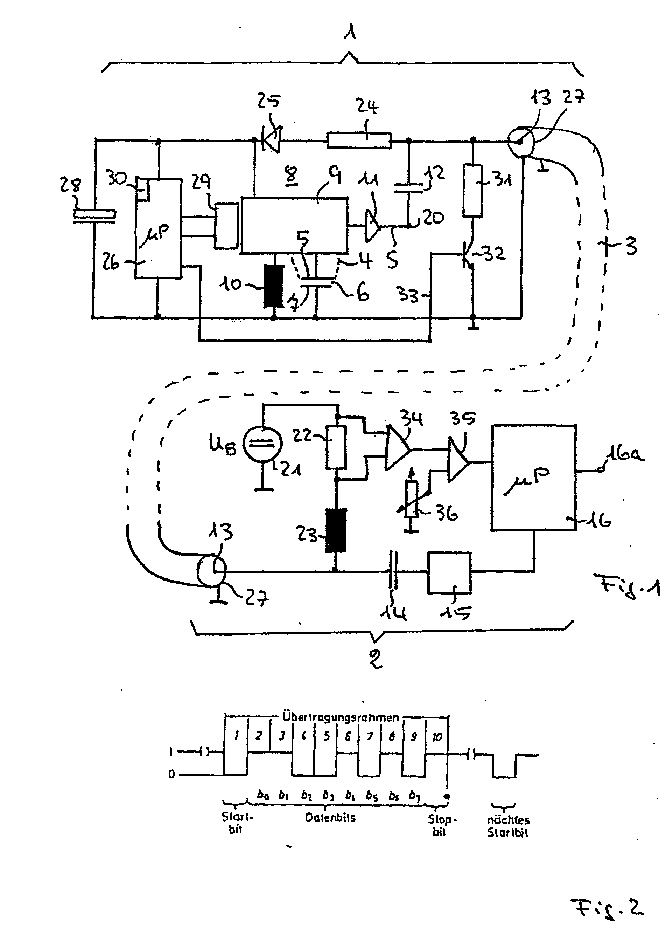

Die Figur 1 zeigt eine Schaltungsanordnung zur Betriebssteuerung eines Bearbeitungskopfes, der z.B. als Laserbearbeitungskopf ausgebildet sein kann. Diese Schaltungsanordnung besteht aus einem Schaltungsteil 1, welcher unmittelbar an dem Laserbearbeitungskopf angeordnet ist, und aus einem getrennt vom Laserbearbeitungskopf angeordneten Auswertegerät 2, das über ein Koaxialkabel 3 mit dem Schaltungsteil 1 verbunden ist.

Der Laserbearbeitungskopf trägt das Bezugszeichen 4 und ist in Figur 1 nur durch gestrichelte Linien angedeutet. Er gehört zum Schaltungsteil 1 und bildet dort eine erste Elektrode 5 eines Meßkondensators 6, dessen zweite Elektrode 7 durch ein Werkstück gebildet ist, welches mit Hilfe des Laserbearbeitungskopfes 4 bearbeitet werden soll. Der Laserbearbeitungskopf 4 ist in bekannter Weise etwa düsenförmig ausgebildet, wobei durch ihn ein Laserstrahl in Düsenlängsrichtung hindurchläuft, um z.B. Schweiß- oder Schneidarbeiten am Werkstück durchzuführen. Zu diesem Zweck kann auch geeignetes Gas durch die Düse strömen.

Bei der Bearbeitung des Werkstücks muß üblicherweise der Abstand zwischen dem Laserbearbeitungskopf 4 und dem Werkstück konstant bleiben, also der Abstand zwischen der ersten Elektrode 5 und der zweiten Elektrode 7. Dieser Abstand wird mit Hilfe der Schaltungsanordnung nach Figur 1 auf kapazitivem Wege gemessen. Hierzu wird ein Abstandsmeßsignal S erzeugt, dessen Frequenz von der Kapazität des Meßkondensators 6 abhängt. Das Abstandsmeßsignal S wird über das Koaxialkabel 3 zum Auswertegerät 2 übertragen und bildet praktischen einen Ist-Wert. Dieser Ist-Wert wird mit einem vorgegebenen Soll-Wert verglichen, und eine Regeleinrichtung regelt dann den gemessenen Ist-Wert auf den Soll-Wert, um einen dem Soll-Wert entsprechenden Abstand zwischen den Elektroden 5 und 7 zu halten. Die entsprechende Stelleinrichtung zur Verstellung der Höhenposition des Laserbearbeitungskopfes 4 relativ zum Werkstück ist in Figur 1 der Übersicht wegen nicht dargestellt.

Das Abstandsmeßsignal S ist das Ausgangssignals eines LC-Oszillators 8, zu dem ein Steuerteil 9, eine Spule 10, der Meßkondensator 6 und einAusgangsverstärker 11 gehören. Genauer gesagt interessiert hier als Ausgangssignal die Frequenz des Abstandsmeßsignals S, das über einen Kondensator 12 gefiltert als Hochfrequenzsignal über einen Innenleiter 13 des Koaxialkabels 3 und ein weiteres Hochpaßfilter 14 einem Frequenzzähler 15 im Auswertgerät zugeführt wird. Die vom Frequenzzähler 15 gezählte Frequenz wird dann einem Mikroprozessor 16 zugeleitet, der diesen Frequenzwert nach noch zu beschreibender Temperaturkorrektur als Ist-Wert ansieht.

Der in Figur 1 gezeigte LC-Oszillator 8 kann einen Aufbau gemäß Figur 5 aufweisen. Danach enthält der LC-Oszillator 8 im Steuerteil 9 einen ersten Transistor 17, einen zweiten Transistor 18 und einen Emitterwiderstand 19. Der Kollektoranschluß des ersten Transistors 17 liegt auf Masse, während sein Basisanschluß mit der Spule 10 und der ersten Elektrode 5 des Meßkondensators 6 gekoppelt ist. Dieser Basisanschluß geht auch auf den Eingang des Ausgangsverstärkers 11. Die anderen Anschlüsse von Spule 10 und Meßkondensator 6 liegen auf Masse, also auch die zweite Elektrode 7 bzw. das Werkstück. Der Steuerteil 9 enthält ferner einen zweiten Transistor 18, dessen Basisanschluß auf Masse liegt, und dessen Kollektoranschluß ebenfalls mit dem Eingang des Ausgangsverstärkers 11 verbunden ist. Die Emitteranschlüsse der beiden Transistoren 17 und 18 sind direkt miteinander verbunden, wobei über einen gemeinsamen Verbindungspunkt ein Emitterwiderstand 19 jeweils mit den Emitteranschlüssen der Transistoren 17 und 18 gekoppelt ist. Der andere Anschluß des Emitterwiderstands 19 enthält negatives Speisepotential. Der Ausgang des Ausgangsverstärkers 11 ist zu einem Ausgangsknoten 20 geführt, der auch in Figur 1 zu erkennen ist.

Der in den Figuren 1 und 5 gezeigte LC-Oszillator 8 ist als Differenzverstärker realisiert. Da das Basispotential des ersten Transistors 17 mit dem Kollektorpotential des zweiten Transistors 18 in Phase ist, kann man die Mitkopplung durch direkte Verbindung erzeugen. Die Schleifenverstärkung ist zur Steilheit der Transistoren proportional. Sie läßt sich durch Änderung des Emitterstromes in weiten Grenzen einstellen. Am Ausgang 20 des LC-Oszillators 8 erhält man dann das Abstandsmeßsignal S, dessen Frequenz von der abstandsabhängigen Kapazität 6 bestimmt ist.

Zur Gleichspannungsversorgung des Schaltungsteils 1 bzw. des LC-Oszillators 8 dient eine im Auswertegerät 2 vorhandene Gleichspannungsquelle 21 zur Lieferung einer Versorgungsspannung U_{B}. Sie liegt mit einem Anschluß auf Masse, während ihr anderer Anschluß über einen Widerstand 22 und eine Spule 23 auf Seiten des Auswertegerätes 2 mit dem Innenleiter 13 des Koaxialkabels 3 verbunden ist. Dabei ist die Spule 23 im Bereich zwischen dem Koaxialkabel 3 und dem Hochpaßfllter 14 mit dem Innenleiter 13 verbunden. Auf Seiten des Schaltungsteils 1 ist der Mittelleiter 13 des Koaxialkabels 3 mit einer Elektrode des Kondensators 12 verbunden, dessen andere Elektrode mit dem Ausgangsknoten 20 verbunden ist, und ferner über einen Widerstand 24 mit der Anode einer Gleichrichterdiode 25 verbunden, deren Kathode zum Steuerteil 9 des LC-Oszillators 8 geführt ist. Auf diese Weise gelangt eine Versorgungsgleichspannung über den Widerstand 24 und die Gleichrichterdiode 25 zum Steuerteil 9. Aus dieser Versorgungsgleichspannung kann im Steuerteil 9 die negative Gleichspannung abgeleitet werden, an welche der Emitterwiderstand 19 gemäß Figur 5 zu legen ist.

Zwischen der Kathode der Gleichrichterdiode 25 und Masse liegt ein Mikroprozessor 26. Sein Masseanschluß ist mit dem auf Masse liegenden Schirmleiter 27 des Koaxialkabels 3 verbunden, mit dem auch der Masseanschluß der Spule 10 und die zweite Elektrode 7 des Meßkondensators 6 verbunden sind. Parallel zum Mikroprozessor 26 liegt ein Energiespeicher 28, etwa ein Elektrolytkondensator, um Spannungseinbrüche ausgleichen zu können.

Der Mikroprozessor 26 ist mit einem Temperatursensor 29 elektrisch verbunden, wobei der Temperatursensor 29 vorzugsweise auf der selben Platine liegt, auf der sich auch der LC-Oszillator 8 befindet, um dessen Temperatur möglichst exakt messen zu können. Die vom Temperatursensor 29 gemessene Temperatur wird im Mikroprozessor 26 in einen digitalen Wert umgesetzt und ggf. zwischengespeichert. In einem Speicherabschnitt 30 des Mikroprozessors 26 ist ferner ein Temperaturkoeffizient gespeichert, der dem mit dem LC-Oszillator 8 verbundenen Laserbearbeitungskopf 4 fest zugeordnet ist. Dieser Temperaturkoeffizient wird nach Herstellung des Laserbearbeitungskopfes 4 und Anbringen des Schaltungsteils 1 an den Laserbearbeitungskopf 4 empirisch ermittelt und im Speicherabschnitt 30 gespeichert. Die vom Temperatursensor 29 gemessene Temperatur und der im Speicherabschnitt 30 gespeicherte Temperaturkoeffizient können dann beim Betrieb des Laserbearbeitungskopfes 4 periodisch und in digitaler Form vom Mikroprozessor 26 zum Auswertegerät 2 übertragen werden, damit im dortigen Mikroprozessor 16 eine Temperaturkompensation des Frequenzzählwertes erfolgen kann, welcher durch den Frequenzzähler 15 ermittelt worden ist. Dabei erfolgt die Übertragung des Temperaturmeßwertes und des Temperaturkoeffizienten ebenfalls über den Innenleiter 13 des Koaxialkabels 3, über den auch das hochfrequente Abstandsmeßsignal S übertragen wird. Allerdings wird das Abstandsmeßsignal in einem wesentlich höheren Frequenzbereich übertragen als das Temperaturmeßsignal und der Temperaturkoeffizient. Die Auswertung des Abstandsmeßsignals S kann darüber hinaus im Millisekundenbereich erfolgen, während die Auswertung des Temperaturmeßsignals und des Temperaturkoeffizienten im Sekundenbereich erfolgen kann.

Um den Temperaturmeßwert und den Temperaturkoeffizienten über den Innenleiter 13 des Koaxialkabels 3 zum Auswertegerät 2 übertragen zu können, kann z.B. eine Modulation des Strombedarfs des Schaltungsteils 1 erfolgen, und zwar dadurch, daß ein Widerstand 31 auf die Versorgungsspannung des Schaltungsteils 1 aufgeschaltet wird. Der Widerstand 31 liegt mit einem Anschluß am Innenleiter 13 und ist mit seinem anderen Anschluß mit dem Kollektor eines Transistors 32 verbunden, dessen Emitter auf Masse liegt. Der Basisanschluß des Transistors 32 ist über eine Leitung 33 mit einem Schaltausgang des Mikroprozessors 26 verbunden. Entsprechend den digitalen Werten der gemessenen Temperatur und des Temperaturkoeffizienten schaltet der Mikroprozessor 26 über die Leitung 33 den Transistor 32 durch und belastet somit die Versorgungsspannung, so daß ein höherer Strom aus der Gleichspannungsquelle 21 gezogen wird. Dieser Strombedarf wird im Auswertegerät 2 überwacht, derart, daß eine Strommessung über dem Widerstand 22 mittels eines Differenzverstärkers 34 erfolgt. Beide Enden des Meßwiderstandes 22 sind also mit unterschiedlichen Eingängen des Differenzverstärkers 34 verbunden, dessen Ausgang auf einen Eingang eines weiteren und als Vergleicher arbeitenden Differenzverstärkers 35 geschaltet ist, an dessen anderen Eingang ein Vergleichswert anlegbar ist, der über einen Mittelabgriff eines Widerstands 36 erhalten wird, welcher zwischen Masse und Speisepotential liegt. Durch die auf Seiten des Auswertegerätes 2 durchgeführte Überwachung des Strombedarfs wird dann am Ausgang des zweiten Differenzverstärkers 35 ein digitales Signal erhalten (z.B. niedriger Betriebsstrom entsprechend einer logischen 0, höherer Betriebsstrom entsprechend einer logischen 1), das den vom Mikroprozessor 26 abgegebenen digitalen Werten von gemessener Temperatur und Temperaturkoeffizienten entspricht. Somit stehen die gemessene Temperatur und der Temperaturkoeffizient dem Mikroprozessor 16 zur Verfügung, so daß er nunmehr eine Temperaturkompensation des durch den Frequenzzähler 15 ermittelten Frequenzwertes des Abstandsmeßsignals S vornehmen kann. Mit anderen Worten erfolgt im Mikroprozessor 16 jetzt eine Korrektur des Ist-Wertes. Ein durch Vergleich des Ist-Werts mit dem Soll-Wert erhaltenes Stellsignal zur Abstandsverstellung wird über einen Ausgang 16a des Mikroprozessors 16 ausgegeben.

Wird z.B. für den Laserbearbeitungskopf 4 festgelegt, daß bei einer Frequenz des Abstandsmeßsignals S von 10 MHz und einer Raumtemperatur von 20°C der Abstand zwischen der ersten Elektrode 5 und der zweiten Elektrode 7 genau 1 mm betragen soll, und weist der Laserbearbeitungskopf einen Temperaturkoeffizienten Δf/ΔT=K=2 KHz/°C auf, so würde sich bei einer tatsächlichen Betriebstemperatur T von 50°C ein ΔT von 30°C ergeben. Dies führt zu einem Korrekturwert hinsichtlich der Frequenz von 60 KHz. Bei 50°C und einem Abstand von einem 1 mm zwischen den Elektroden 5 und 7 würde sich daher die Frequenz des Abstandsmeßsignals S zunächst auf 10,06 MHz einstellen, was falsch wäre. Da dem Mikroprozessor 16 allerdings die tatsächliche Temperatur T=50°C und der Temperaturkoeffizient K=2 KHz/°C vom Mikroprozessor 26 mitgeteilt wurde, kann ersterer die Frequenz des Abstandsmeßsignals S um 60 KHz auf 10,0 MHz korrigieren, so daß auch bei einer Temperatur von T=50°C wieder auf den Abstand von lmm geregelt werden kann.

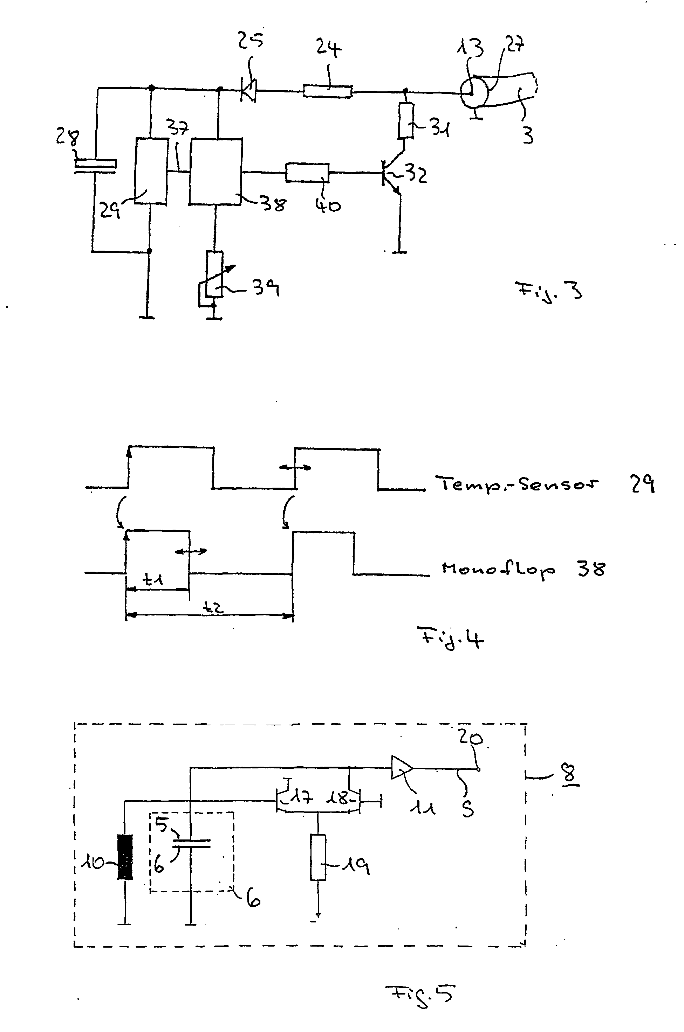

Zur digitalen Übertragung des Temperaturmeßwertes und des Temperaturkoeffizienten vom Schaltungsteil 1 zum Auswertegerät 2 kann ein Übertragungsrahmen gewählt werden, wie in Figur 2 gezeigt ist. Dieser Übertragungsrahmen weist ein Start-bit und ein Stop-bit auf sowie dazwischenliegenden Datenbits, die für die gemessene Temperatur und den Temperaturkoeffizienten reserviert sind. Diese Datenbits werden in geeigneter Weise durch den Mikroprozessor 26 zusammengestellt.

Die Figur 3 zeigt eine besonders einfache Ausführung einer Temperaturerfassung beim Bearbeitungskopf 4. Gleiche Elemente wie in Figur 1 sind wiederum mit den gleichen Bezugszeichen versehen und werden nicht nochmals beschrieben. Der LC-Oszillator ist allerdings in Figur 3 der Übersicht wegen fortgelassen.

Ein als integrierte Schaltung ausgeführter Temperatursensor 29 liegt zwischen der Kathode der Gleichrichterdiode 25 und Masse. Parallel zum Temperatursensor 29 liegt der Energiespeicher 28. An einem Ausgang 37 liefert der Temperatursensor 29 als Ausgangssignal eine Rechteckspannung, deren Frequenz der gemessenen Temperatur proportional ist. Der Verlauf der Rechteckspannung am Ausgang 37 ist oben in Figur 4 gezeigt. Um zusätzlich zur Temperatur einen Temperaturkoeffizienten übertragen zu können, wird mit einem Mono-Flop 38 das Tastverhältnis des Ausgangssignals des Temperatursensor 29 derart beeinflußt, daß die bei jedem Bearbeitungskopf 4 individuell einstellbare Zeit t1 bzw. Pulsdauer proportional zum Temperaturkoeffizienten ist. Dies ist in Figur 4 unten zu erkennen. Die Zeit t2 enthält die Temperaturinformation bzw. die Information über den gemessenen Temperaturwert.

Der Mono-Flop 38 ist zur Spannungsversorgung einerseits mit der Kathode der Gleichrichterdiode 25 verbunden und liegt andererseits über einen veränderbaren Widerstand 39 an Masse. Durch den einstellbaren Widerstand 39 läßt sich die Zeit t1 verändern, also der für den jeweiligen Bearbeitungskopf 4 vorgesehene Temperaturkoeffizient, so daß der Widerstand 39 als Speicher für den Temperaturkoeffizienten angesehen werden kann. Der Ausgang des Mono-Flops 38 ist über einen Basiswiderstand 40 mit dem Transistor 32 verbunden, dessen Emitter auf Masse liegt und dessen Kollektor über den Widerstand 31 mit dem Innenleiter 13 des Koaxialkabels 3 verbunden ist. Die Versorgungsgleichspannung wird also im Takte des Ausgangssignals des Mono-Flops 38 (Figur 4 unten) belastet, so daß entsprechende Stromschwankungen auf Seiten des Auswertegerätes 2 in der schon beschriebenen Weise gemessen werden können. Mit anderen Worten kann das Ausgangssignal des Mono-Flops 38 (Figur 4 unten) auf Seiten des Auswertegerätes 2 reproduziert werden, so daß der Mikroprozessor 16 die Zeiten t1 und t2 etwa durch Zählung bestimmen kann und damit den Temperaturkoeffizienten (Zeit t1) sowie die gemessene Temperatur (Zeit t2). Auch jetzt kann wieder eine Temperaturkompensation in der schon beschriebenen Weise vorgenommen werden, indem der Zählwert des Frequenzzählers 15 entsprechend korrigiert wird.

## Patentansprüche

1. Verfahren zur Temperaturkompensation eines einen Bearbeitungskopf (4) aufweisenden LC-Oszillators (8) zur kapazitiven Messung eines zwischen dem Bearbeitungskopf (4) und einem Werkstück (7) liegenden Abstands, bei dem
- ein Ausgangssignal (S) des LC-Oszillators (8) zu einem vom Bearbeitungskopf (4) getrennt angeordneten Auswertegerät (2) übertragen wird,
- mit Hilfe eines Temperatursensors (29) die Temperatur (T) des LC-Oszillators (8) gemessen wird,
- die Temperatur (T) zum Auswertegerät (2) übertragen wird, und
- im Auswertegerät (2) eine Temperaturkompensation des Ausgangssignals (S) des LC-Oszillators (8) anhand der gemessenen Temperatur (T) und eines dem Bearbeitungkopf (4) zugeordneten Temperaturkoeffizienten (K) erfolgt,
**dadurch gekennzeichnet, daß** der Temperaturkoeffizient (K) in einem vom Bearbeitungskopf (4) getragenen Speicher (30, 39) gespeichert und zum Zwecke der Temperaturkompensation des Ausgangssignals (S) des LC-Oszillators (8) zum Auswertegerät (2) übertragen wird.

2. Verfahren nach Anspruch 1, **dadurch gekennzeichnet, daß** die Übertragung der gemessenen Temperatur (T) bzw. des gespeicherten Temperaturkoeffizienten (K) zum Auswertegerät (2) auf digitalem Wege erfolgt.

3. Verfahren nach Anspruch 1 oder 2 **dadurch gekennzeichnet, daß** wenigstens das Ausgangssignal (S) des LC-Oszillators (8) und die gemessene Temperatur (T), ggf. auch der Temperaturkoeffizient (K) über dieselbe Leitung (3) zum Auswertegerät (2) übertragen werden.

4. Verfahren nach Anspruch 2 oder 3, **dadurch gekennzeichnet, daß** die Übertragung der gemessenen Temperatur (T) bzw. des Temperaturkoeffizienten (K) auf digitalem Wege in einem anderen Frequenzbereich als die des Ausgangssignals (S) des LC-Oszillators (8) erfolgt.

5. Verfahren nach einem der Ansprüche 2 bis 4, **dadurch gekennzeichnet, daß** die Digitalisierung durch eine Modulation des Strombedarfs einer bearbeitungskopfseitig vorhandenen Schaltung (1) erfolgt, die wenigstens den Temperatursensor (29) enthält, und daß der modulierte Strombedarf im Auswertegerät (2) überwacht wird.

6. Verfahren nach einem der Ansprüche 2 bis 5, **dadurch gekennzeichnet, daß** als Datenformat der digitalen Übertragung ein serieller Bitstrom verwendet wird.

7. Verfahren nach einem der Ansprüche 2 bis 5, **dadurch gekennzeichnet, daß** zur digitalen Übertragung eine Rechteckspannung verwendet wird, deren Frequenz der gemessenen Temperatur (T) und deren Pulsdauer (t1) dem Temperaturkoeffizienten (K) proportional sind.

8. Bearbeitungskopf (4) mit einem zum Teil durch ihn gebildeten LC-Oszillators (8) zur kapazitiven Messung eines Abstands zwischen dem Bearbeitungskopf (4) und einem zu bearbeitenden Werkstück (7), bei dem ein Ausgangssignal (S) des LC-Oszillators (8) zu einem vom Bearbeitungskopf (4) getrennten Auswertegerät (2) übertragbar ist, wobei der Bearbeitungskopf (4) wenigstens einen Temperatursensor (29) zur Messung der Temperatur (T) des LC-Oszillators (8) aufweist und die gemessene Temperatur (T) zum Auswertegerät (2) übertragbar ist, **dadurch gekennzeichnet, daß** er einen Speicher (30, 39) zur Speicherung eines für ihn vorgesehenen Temperaturkoeffizienten (K) aufweist, der zum Auswertegerät (2) übertragbar ist.

9. Bearbeitungskopf nach Anspruch 8, **dadurch gekennzeichnet, daß** er eine Schaltung (26, 31, 32; 38, 39, 31, 32) zur Digitalisierung der gemessenen Temperatur (T) bzw. des Temperaturkoeffizienten (K) aufweist.

10. Bearbeitungskopf nach Anspruch 9, **dadurch gekennzeichnet, daß** die Digitalisierungsschaltung über ein mit ihr verbindbares Kabel (3) mit einer Versorgungsspannung (U_{B}) vom Auswertegerät (2) versorgbar ist und die Digitalisierung durch Modulation ihres Strombedarfs dadurch erfolgt, daß ein die Versorgungsspannung (U_{B}) empfangen der Widerstand (31), der zur Digitalisierungsschaltung gehört, auf Masse geschaltet wird.

11. Bearbeitungskopf nach einem der Ansprüche 8 bis 10, **dadurch gekennzeichnet, daß** er als Laserbearbeitungskopf (4) ausgebildet ist.

## Claims

1. Method for temperature compensation of an LC oscillator (8) having a machining head (4) and serving for the capacitive measurement of a distance between the machining head (4) and a workpiece (7), in which
- an output signal (S) of the LC oscillator (8) is transmitted to an evaluation unit (2) arranged separately from the machining head (4),
- the temperature (T) of the LC oscillator (8) is measured with the aid of a temperature sensor (29),
- the temperature (T) is transmitted to the evaluation unit (2), and
- in the evaluation unit (2), temperature compensation of the output signal (S) of the LC oscillator (8) is effected using the measured temperature (T) and a temperature coefficient (K) assigned to the machining head (4), **characterized in that** the temperature coefficient (K) is stored in a storage device (30, 39) carried by the machining head (4) and is transmitted to the evaluation unit (2) for the purpose of temperature compensation of the output signal (S) of the LC oscillator (8).

2. Method according to Claim 1, **characterized in that** the transmission of the measured temperature (T) and/or of the stored temperature coefficient (K) to the evaluation unit (2) is effected digitally.

3. Method according to Claim 1, **characterized in that** at least the output signal (S) of the LC oscillator (8) and the measured temperature (T), and if appropriate the temperature coefficient (K) as well, are transmitted to the evaluation unit (2) via the same line (3).

4. Method according to Claim 2 or 3, **characterized in that** the transmission of the measured temperature (T) and/or of the temperature coefficient (K) is effected digitally in a different frequency range from that of the output signal (S) of the LC oscillator (8).

5. Method according to one of Claims 2 to 4, **characterized in that** the digitization is effected by modulation of the current demand of a circuit (1) which is present in a manner pertaining to the machining head and contains at least the temperature sensor (29), and **in that** the modulated current demand is monitored in the evaluation unit (2).

6. Method according to one of Claims 2 to 5, **characterized in that** a serial bit stream is used as data format of the digital transmission.

7. Method according to one of Claims 2 to 5, **characterized in that**, for the digital transmission, a square-wave voltage is used whose frequency is proportional to the measured temperature (T) and whose pulse duration (t1) is proportional to the temperature coefficient (K).

8. Machining head (4) having an LC oscillator (8) formed partly by it and serving for the capacitive measurement of a distance between the machining head (4) and a workpiece (7) to be machined, in which an output signal (S) of the LC oscillator (8) can be transmitted to an evaluation unit (2) separate from the machining head. (4), the machining head having at least one temperature sensor (29) for measuring the temperature (T) of the LC oscillator (8), and it being possible to transmit the measured temperature (T) to the evaluation unit (2), **characterized in that** it has a storage device (30, 39) for storing a temperature coefficient (K) which is provided for it and can be transmitted to the evaluation unit (2).

9. Machining head according to Claim 8, **characterized in that** it has a circuit (26, 31, 32; 38, 39, 31, 32) for digitizing the measured temperature (T) and/or the temperature coefficient (K).

10. Machining head according to Claim 9, **characterized in that** the digitization circuit can be supplied via a cable (3), which can be connected to it, with a supply voltage (U_{B}) from the evaluation unit (2) and the digitization is effected by modulation of its current demand **in that** a resistor (31), which receives the supply voltage (U_{B}) and is part of the digitization circuit, is connected to earth.

11. Machining head according to one of Claims 8 to 10, **characterized in that** it is designed as a laser machining head (4).

## Revendications

1. Procédé de compensation de température d'un oscillateur LC (8) présentant une tête d'usinage (4) pour la mesure capacitive d'un espacement entre la tête d'usinage (4) et une pièce à usiner (7), dans lequel
- un signal de sortie (S) de l'oscillateur LC (8) est transmis à un appareil d'évaluation (2) disposé séparément de la tête d'usinage (4),
- la température (T) de l'oscillateur LC (8) est mesurée à l'aide d'un capteur de température (29),
- la température (T) est transmise à l'appareil d'évaluation (2), et
- dans l'appareil d'évaluation (2), on effectue une compensation de température du signal de sortie (S) de l'oscillateur LC (8) à l'aide de la température (T) mesurée et d'un coefficient de température (K) associé à la tête d'usinage (4),
**caractérisé en ce que** le coefficient de température (K) est stocké dans une mémoire (30, 39) portée par la tête d'usinage (4) et est transmis à l'appareil d'évaluation (2) dans le but d'effectuer la compensation de température du signal de sortie (S) de l'oscillateur LC (8).

2. Procédé selon la revendication 1, **caractérisé en ce que** la transmission, de la température (T) mesurée et/ou du coefficient de température (K) stocké à l'appareil d'évaluation (2), est effectué par voie numérique:

3. Procédé selon la revendication 1 ou 2, **caractérisé en ce qu'**au moins le signal de sortie (S) de l'oscillateur LC (8) et la température (T) mesurée, le cas échéant également le coefficient de température (K), sont transmis à l'appareil d'évaluation (2), sur la même ligne (3).

4. Procédé selon la revendication 2 ou 3, **caractérisé en ce que** la transmission de la température (T) mesurée et/ou du coefficient de température (K) est réalisée par voie numérique dans une plage de fréquence autre que celle du signal de sortie (S) de l'oscillateur LC (8).

5. Procédé selon l'une des revendications 2 à 4, **caractérisé en ce que** la numérisation est effectuée par une modulation du besoin en courant électrique d'un circuit (2) existant du côté tête d'usinage, et contenant au moins le capteur de température (29), et **en ce que** le besoin en courant modulé est surveillé dans l'appareil d'évaluation (2).

6. Procédé selon l'une des revendications 2 à 5, **caractérisé en ce qu'**un flux de bits série est utilisé en tant que format de données de la transmission numérique.

7. Procédé selon l'une des revendications 2 à 5, **caractérisé en ce qu'**on utilise pour la transmission numérique une tension de forme rectangulaire, dont la fréquence est proportionnelle à la température (T) mesurée et dont la durée d'impulsion (t1) est proportionnelle au coefficient de température (K).

8. Tête d'usinage (4) munie d'un oscillateur LC (8) formé en partie par elle, pour la mesure capacitive d'un espacement entre la tête d'usinage (4) et une pièce (7) à usiner, tête dans laquelle un signal de sortie (S) de l'oscillateur LC (8) est susceptible d'être transmis à un appareil d'évaluation (2) séparé de la tête d'usinage (4), la tête d'usinage (4) comportant au moins un capteur de température (29) pour la mesure de la température (T) de l'oscillateur LC (8) et la température (T) mesurée étant susceptible d'être transmise à l'appareil d'évaluation (2),
**caractérisée en ce qu'**elle comporte une mémoire (30, 39) pour mémoriser un coefficient de température (K) prévu pour elle, et qui est susceptible d'être transmis à l'appareil d'évaluation (2).

9. Tête d'usinage selon la revendication 8, **caractérisée en ce qu'**elle présente un circuit (26, 31, 32; 38, 39, 31, 32) pour numériser la température (T) mesurée ou le coefficient de température (K).

10. Tête d'usinage selon la revendication 9, **caractérisée en ce que** le circuit de numérisation est susceptible d'être alimenté avec une tension d'alimentation (U_{B}), par l'appareil d'évaluation (2) via un câble (3) susceptible de lui être relié, et **en ce que** la numérisation est réalisée par modulation de sa demande de courant électrique, par le fait qu'une résistance (31), recevant la tension d'alimentation (U_{B}), qui appartient au circuit de numérisation, est branchée à la masse.

11. Tête d'usinage selon l'une des revendications 8 à 10, **caractérisée en ce qu'**elle est réalisée sous la forme d'une tête d'usinage à laser (4).
